# EUROPÄISCHE PATENTANMELDUNG

(11) **EP 1 002 946 A2**
(43) Veröffentlichungstag der Anmeldung: **24.05.2000**
(21) Anmeldenummer: 99121043.6
(22) Anmeldetag: 21.10.1999
(51) Int. Cl.: F02M 1/16

(54) **Kraftstoffanlage mit einer Starthilfe-Einrichtung für Brennkraftmaschinen**

(30) Priorität: 19.11.1998 DE 19853413
(71) Anmelder: Bayerische Motoren Werke Aktiengesellschaft, 80809 München (DE)
(72) Erfinder: Fischer, Gregor, 85737 Ismaning (DE)

(57) **Zusammenfassung**

Für eine Kraftstoffanlage mit einer Starthilfe-Einrichtung für Brennkraftmaschinen, umfassend Tanks für unterschiedliche Kraftstoffe, die über ein einziges Gemischbildungssystem der Brennkraftmaschine zugeführt werden, wird vorgeschlagen, daß als Starthilfe-Kraftstoff ein Kondensat aus Dämpfen leichtsiedender Bestandteile des Betriebs-Kraftstoffes dient.

## Beschreibung

Die Erfindung bezieht sich nach dem Oberbegriff des Patentanspruches 1 auf eine Kraftstoffanlage mit einer Starthilfe-Einrichtung für Brennkraftmaschinen, umfassend einen ersten Tank, aus dem ein Betriebs-Kraftstoff über eine Vorlaufleitung pumpengefördert einem Gemischbildungssystem zugeführt und überschüssiger Kraftstoff druckgesteuert über eine Rücklaufleitung abgeführt ist sowie einen zweiten Tank für einen Starthilfe-Kraftstoff, der dem mit dem Betriebs-Kraftstoff betriebenen Gemischbildungssystem gesteuert zugeführt ist.

Eine derartige Kraftstoffanlage mit Starthilfe-Einrichtung ist beispielsweise aus der deutschen Patentschrift DE 39 09 750 C2 bekannt, wobei das an der Brennkraftmaschine installierte Gemischbildungssystem derart ausgelegt ist, daß neben dem üblichen Betriebs-Kraftstoff ein gesonderter Starthilfe-Kraftstoff der Brennkraftmaschine zugeführt werden kann. Nachteilig hierbei ist, daß der zuletzt eingespritzte Kraftstoff vor Umstellung auf den anderen Kraftstoff aus den Leitungen ausgespült werden muß. Weiter wesentlich nachteilig ist ferner, daß an Bord eines Kraftfahrzeuges zwei verschiedene Kraftstoffe mitgeführt werden müssen.

Die vorgenannten Nachteile sind mit einer Kraftstoffanlage mit Starthilfe-Einrichtung gemäß der US-PS 5,224,456 dadurch behoben, daß mit der Starthilfe-Einrichtung Dämpfe leichtsiedender Bestandteile des üblichen Betriebs-Kraftstoffes beim Starten der Brennkraftmaschine in deren Ansauganlage eingespeist werden, wobei zur Sicherstellung einer ausreichenden Verbrennung in den Zylindern der zugeführten Dampfmasse entsprechend flüssiger Betriebs-Kraftstoff zugegeben wird. Mit dieser bekannten Anlage erübrigt sich zwar ein gesonderter Kraftstoff als Starthilfe, jedoch ergibt sich mit der Einführung von Kraftstoffdämpfen in die Ansauganlage durch mögliche Rückzündungen in der Ansauganlage aufgrund beispielsweise undichter Einlaßventile die erhebliche Gefahr der Zerstörung der Ansauganlage.

Ferner ist es zur Überwindung von Anlaßschwierigkeiten aus der DE-PS 879 482 bekannt, zusätzlich einen besonders leicht flüchtigen oder normal gasförmigen Anlaßtreibstoff zu verwenden.

Der Erfindung liegt die Aufgabe zugrunde, eine gattungsgemäße Kraftstoffanlage mit einer Starthilfe-Einrichtung derart zu verbessern, daß ein aus einem dampfförmigen Starthilfe-Kraftstoff resultierendes Risiko beim Start und Warmlauf der Brennkraftmaschine sicher vermieden ist.

Diese Aufgabe ist mit dem Patentanspruch 1 gelöst.

Mit der Erfindung ist in vorteilhafter Weise ein risikofreies Starten und Warmlaufen der Brennkraftmaschine erzielt, wobei mit der Verwendung der Erfindung an Bord eines Kraftfahrzeuges der weitere Vorteil erreicht ist, daß der Starthilfe-Kraftstoff während üblicher Betriebsphasen unter Verwendung von Abwärme der Brennkraftmaschine erzeugt und im zweiten Tank für einen nächsten Start und Warmlauf zwischengespeichert ist.

Hierfür ist einem stromauf eines Druckhalteventils aus der Rücklaufleitung des ersten Tanks abgezweigten Betriebs-Kraftstoff über einen Wärmetauscher Verdampfungswärme zugeführt, wobei der erwärmte bzw. erhitzte Kraftstoff über ein Regulierventil einem Dampfabscheider zuströmt, aus dem die Dämpfe leichtsiedender Kraftstoff-Bestandteile mittels eines Verdichters abgesaugt und einem Kondensator zugeführt sind, der mit dem zweiten Tank kondensatführend verbunden ist.

Weiter wird vorgeschlagen, daß der Kondensat-Tank über eine Ablaufleitung und ein Umschaltventil mit einem Saugabschnitt der Vorlaufleitung des ersten Tanks in Verbindung steht, wobei das Umschaltventil stromab nah benachbart einer Förderpumpe angeordnet ist, die zur Vermeidung von Spülungen der Kraftstoffleitungen zum Gemischbildungssystem erfindungsgemäß über einen relativ kurzen Druckabschnitt der Vorlaufleitung mit dem Gemischbildungssystem der Brennkraftmaschine in Verbindung steht.

Gemäß einer abweichenden Ausgestaltung der Erfindung ist es auch denkbar, daß der Kondensat-Tank über eine ventilgesteuerte Ablaufleitung direkt mit dem Gemischbildungssystem der Brennkraftmaschine in Verbindung steht.

Zusätzliche Ausgestaltungsmerkmale sind Inhalt weiterer Unteransprüche.

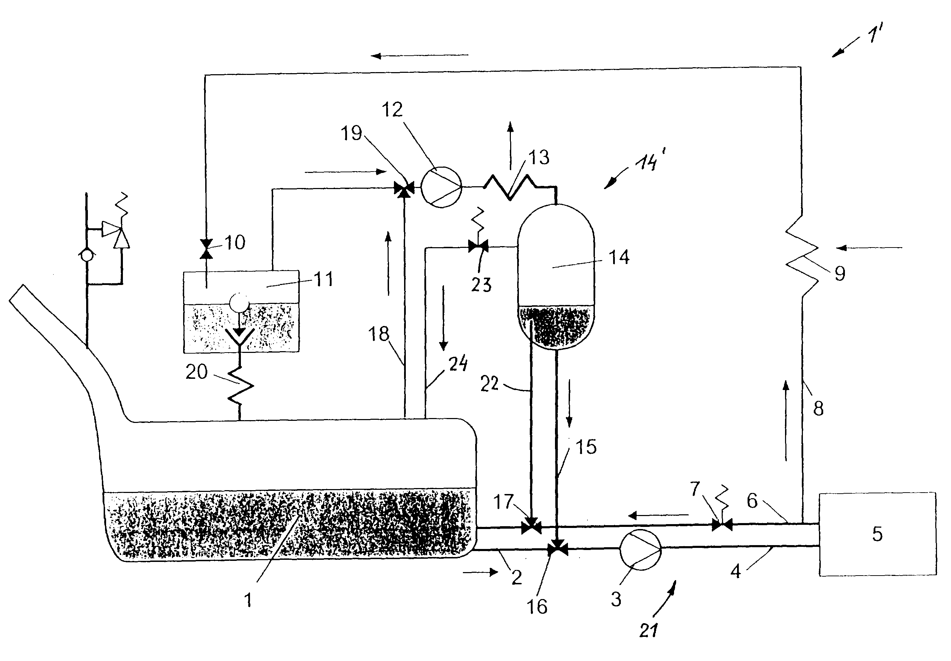

Die Erfindung ist anhand eines in der Zeichnung schematisch dargestellten Beispiels einer Kraftstoffanlage mit einer Starthilfe-Einrichtung beschrieben.

Eine Kraftstoffanlage 1' mit einer Starthilfe-Einrichtung 14' für eine Brennkraftmaschine 5 umfaßt einen ersten Tank 1, aus dem ein Betriebs-Kraftstoff über eine Vorlaufleitung 21 pumpengefördert einem nicht gezeigten Gemischbildungssystem zugeführt und überschüssiger Kraftstoff druckgesteuert über eine Rücklaufleiltung 6 abgeführt ist. Weiter umfaßt die Kraftstoffanlage 1' eine Starthilfe-Einrichtung 14' mit einem zweiten Tank 14 für einen Starthilfe-Kraftstoff, der dem mit dem Betriebs-Kraftstoff gespeisten Gemischbildungssystem gesteuert zugeführt ist.

Um bei einem aus dem beispielsweise an Bord eines Kraftfahrzeuges mitgeführten üblichen Betriebs-Kraftstoff erzeugten Starthilfe-Kraftstoff einen risikofreien Startvorgang mit anschließendem Warmlauf zu erreichen, wird erfindungsgemäß vorgeschlagen, daß als Starthilfe-Kraftstoff ein Kondensat aus Dämpfen leichtsiedender Bestandteile des Betriebs-Kraftstoffes dient.

Zur erfindungsgemäßen Erzeugung des Starthilfe-Kraftstoffes ist einem stromauf eines Druckhalteventils 7 aus der Rücklaufleitung 6 abgezweigten Betriebs-Kraftstoff über einen Wärmetauscher 9 Verdampfungswärme zugeführt, wobei der erwärmte bzw. erhitzte Kraftstoff über ein Regulierventil 10 einem Dampfabscheider 11 zuströmt, aus dem die Dämpfe leichtsiedender Kraftstoffbestandteile mittels eines Verdichters 12 abgesaugt und einem Kondensator 13 zugeführt sind, der mit dem zweiten Tank 14 kondensatführend verbunden ist.

Wie weiter aus der einzigen Figur ersichtlich, steht der Kondensat-Tank 14 über eine Ablaufleitung 15 und ein Umschaltventil 16 mit einem Saugabschnitt 2 der Vorlaufleitung 21 des ersten Tanks 1 in Verbindung, wobei das Umschaltventil 16 stromab nah benachbart einer Förderpumpe 3 angeordnet ist, die über einen relativ kurzen Druckabschnitt 4 der Vorlaufleitung 21 mit dem Gemischbildungssystem der Brennkraftmaschine 5 in Verbindung steht. Mit der letztgenannten motornahen Anordnung kann ein Spülen der Leitungen zum und im Gemischbildungssystem unterbleiben.

Um für wiederholte Startwiederholungen genügend Starthilfe-Kraftstoff zu haben, ist der Starthilfe-Kraftstoff vom Gemischbildungssystem der Brennkraftmaschine 5 über die Rücklaufleitung 6 und einem Umschaltventil 17 mittels einer Zulaufleitung 22 in den Kondensat-Tank 14 rückgeführt.

Weiter steht der Kondensat-Tank 14 zum Abbau eines Überdruckes über eine mit einem Druckventil 23 ausgerüstete Abblaseleitung 24 mit dem ersten Tank für den Betriebs-Kraftstoff in Verbindung.

Ferner kann die erfindungsgemäße Starthilfe-Einrichtung 14' durch die übliche Dampfbildung im ersten Tank für den Betriebs-Kraftstoff dadurch unterstützt sein, daß der erste Tank 1 von einem Hochpunkt aus über eine ventilgesteuerte Abströmleitung 18 mit dem Verdichter 12 saugseitig verbunden ist.

Schließlich ist der im Dampfabscheider 11 gesammelte Kraftstoff aus schwerflüchtigen bzw. hochsiedenden Bestandteilen über einen kraftstoffkühlenden Wärmetauscher 20 in den ersten Tank 1 zurückgeführt, vorzugsweise schwimmergesteuert zurückgeführt.

Mit der erfindungsgemäßen Kraftstoffanlage mit Starthilfe-Einrichtung wird der Brennkraftmaschine 5 in der Start-/Warmlaufphase ein in deren Brennräumen leicht entzündbarer flüssiger Kraftstoff zur Verfügung gestellt mit den Vorteilen eines verbesserten Kaltstartverhaltens, insbesondere bei tiefen Temperaturen sowie reduzierten Emissionen bei Kaltstart und Warm lauf. Weiter ist mit der Erzeugung des Starthilfe-Kraftstoffes mit hohem Anteil an leichtflüchtigen Komponenten an Bord eines Kraftfahrzeuges in vorteilhafter Weise erzielt, daß nur ein Betriebskraftstoff bei der Betankung erforderlich ist und somit eine zusätzliche Infrastruktur hierfür entfällt. Weiter ist mit der erfindungsgemäßen Kraftstoffanlage immer ein Starthilfe-Kraftstoff an Bord vorhanden.

## Patentansprüche

1. Kraftstoffanlage mit einer Starthilfe-Einrichtung für Brennkraftmaschinen,
- umfassend einen ersten Tank (1), aus dem ein Betriebs-Kraftstoff über eine Vorlaufleitung (21) pumpengefördert einem Gemischbildungssystem zugeführt und überschüssiger Kraftstoff druckgesteuert über eine Rücklaufleitung (6) abgeführt ist, sowie
- einem zweiten Tank (14) für einen Starthilfe-Kraftstoff, der dem mit dem Betriebs-Kraftstoff gespeisten Gemischbildungssystem gesteuert zugeführt ist,
**dadurch gekennzeichnet,**
- daß einem stromauf eines Druckhalteventils (7) aus der Rücklaufleitung (6) abgezweigten Betriebs-Kraftstoff über einen Wärmetauscher (9) Verdampfungswärme zugeführt ist, und
- daß der erwärmte bzw. erhitzte Kraftstoff über ein Regulierventil (10) einem Dampfabscheider (11) zuströmt, aus dem
- die Dämpfe leichtsiedender Kraftstoffbestandteile mittels eines Verdichters (12) abgesaugt und einem Kondensator (13) zugeführt sind, der
- mit dem zweiten Tank (14) kondensatführend verbunden ist, wobei
- das Kondensat aus Dämpfen leichtsiedender Bestandteile des Betriebs-Kraftstoffes als Starthilfe-Kraftstoff dient.

2. Kraftstoffanlage nach Anspruch 1, **dadurch gekennzeichnet,**
- daß der Kondensat-Tank (14) über eine Ablaufleitung (15) und ein Umschaltventil (16) mit einem Saugabschnitt (2) der Vorlaufleitung (21) des ersten Tanks (1) in Verbindung steht, wobei
- das Umschaltventil (16) stromab nah benachbart einer Förderpumpe (3) angeordnet ist, die
- über einen relativ kurzen Druckabschnitt (4) der Vorlaufleitung (21) mit dem Gemischbildungssystem der Brennkraftmaschine (5) in Verbindung steht.

3. Kraftstoffanlage nach Anspruch 1 bis 2, **dadurch gekennzeichnet,** daß der Kondensat-Tank (14) über eine ventilgesteuerte Ablaufleitung direkt mit dem Gemischbildungssystem der Brennkraftmaschine (5) in Verbindung steht.

4. Kraftstoffanlage nach Anspruch 1 bis 3, **dadurch gekennzeichnet,** daß der Starthilfe-Kraftstoff vom Gemischbildungssystem der Brennkraftmaschine (5) über die Rücklaufleitung (6) und einem Umschaltventil (17) mittels einer Zulaufleitung (22) in den Kondensat-Tank (14) rückgeführt ist.

5. Kraftstoffanlage nach einem der Ansprüche 1 bis 4, **dadurch gekennzeichnet,** daß der Kondensat-Tank (14) über eine mit einem Druckventil (23) ausgerüstete Abblaseleitung (24) mit dem ersten Tank (1) in Verbindung steht.

6. Kraftstoffanlage nach einem der Ansprüche 1 bis 5, **dadurch gekennzeichnet,** daß der erste Tank (1) von einem Hochpunkt aus über eine ventilgesteuerte Abströmleitung (18) mit dem Verdichter (12) saugseitig verbunden ist.

7. Kraftstoffanlage nach Anspruch 1, **dadurch gekennzeichnet,** daß der im Dampfabscheider (11) gesammelte Kraftstoff aus schwerflüchtigen bzw. hochsiedenden Bestandteilen über einen kraftstoffkühlenden Wärmetauscher (20) in den ersten Tank (1) ventilgesteuert zurückgeführt ist.

8. Kraftstoffanlage nach einem der Ansprüche 1 bis 7, **gekennzeichnet durch**
- die Verwendung an Bord eines Kraftfahrzeuges, wobei
- der Starthilfe-Kraftstoff während üblicher Betriebsphasen der Brennkraftmaschine (5) unter Verwendung von Abwärme der Brennkraftmaschine (5) erzeugt und im zweiten Tank bzw. Kondensat-Tank (14) für einen nächsten Start/Warmlauf zwischengespeichert ist.
